# EUROPEAN PATENT SPECIFICATION

(11) **EP 3 839 470 B1**
(45) Date of publication and mention of the grant of the patent: **15.01.2025**
(21) Application number: 19216739.3
(22) Date of filing: 16.12.2019
(51) Int. Cl.: G01M 3/32

(54) **METHOD AND APPARATUS FOR TESTING PAPERBOARD-BASED CONTAINERS**
VERFAHREN UND VORRICHTUNG ZUM PRÜFEN VON PAPPEBASIERTEN BEHÄLTERN
PROCÉDÉ ET APPAREIL POUR TESTER DES RÉCIPIENTS À BASE DE CARTON

(43) Date of publication of application: 23.06.2021
(73) Proprietor: Elopak ASA, 3431 Spikkestad (NO)
(72) Inventor: SCHEERER, Thiemo, DE-52441 Linnich (DE); LITTMANN, Frank, DE-41751 Viersen (DE)
(74) Representative: Onsagers AS

(56) References cited:
- GB-A- 2 075 202
- US-A- 4 733 555
- "ASTM F2095- 07e1 Standard test methods for pressure decay leak test for flexible packages with and without restraining plates", ASTM D6556 - 10, ASTM INTERNATIONAL, US, vol. 15.10, 1 January 2007 (2007-01-01), pages 1 - 6, XP008096350, ISSN: 0192-2998, DOI: 10.1520/F2095-01

## Description

The present invention relates to a method and a system for verifying the food product holding capability of sealed containers. In particular, the invention relates to a method and a system checking for leakage in and/or controlling the strength of paperboard-based containers.

Within the art of paperboard-based liquid packaging, it is known to produce a blank and fold and assemble the blank to produce a container. The container may then be utilised to hold a liquid, e.g. dairy products, such as milk or yoghurt, or juices.

The blank is typically produced from a laminate packaging material, which typically comprises a multi-ply paperboard sheet on which is laminated one or a plurality of barrier layers for holding the liquid and/or prevent migration of air and flavours through the paperboard. A barrier layer may typically comprise a polyethylene or an aluminium layer.

A method of producing the blank from the laminate packaging material typically comprises the steps of cutting the laminate packaging material to a predefined shape and providing crease lines in the laminate packaging material, and a method of producing the container from the blank typically comprises the step of folding the blank along crease lines to produce the container.

A crease line, or crease, may be defined as an embossed or impressed depression on one side of the laminate packaging material with a corresponding raised ridge or welt, also referred to as the bead, on the other side forming a line along which the laminate packaging material is structurally weakened and along which the laminate packaging material will bend or fold when pressure is applied. After folding, parts of the blank are glued or welded together to form a sealed container.

As is known in the art, paperboard-based containers may alternatively be made in a roll-fed process in which a web of paperboard-material is continuously folded to form a tube, filled with the food product, sealed to form so called pouches, and finally cut to form individual containers.

Generally, there is a need to control or verify the integrity of the container, e.g. to control the container's susceptibility to leakage and also to control the strength of the container, in particular the strength of sealed seams. Also, as part of a development program the integrity level of a new container must be tested before launching it in the market, and in the serial production phase the integrity level of the packages must be ensured. Typically, in the production phase, container samples are continuously taken from the production and tested to monitor their integrity level.

The standard method of testing the integrity of produced containers is the so-called Blue Die Test (BDT). In this test, leakage is detected by means of coloured die. The die is provided on the inside of the container. If the die leaks through the package, the die will be easily visible on the outside of the package when inspected by an operator.

A drawback of the BDT is that it is a subjective method which is unsuitable for automation. Furthermore, the test is relatively time-consuming. Yet another drawback is that the test requires the use of unwanted chemicals.

WO2017/192035 discloses a method and a system for measuring leak tightness (i.e. pressure testing) of sealed packages. The method includes providing a sealed package having a first deformable volume and providing a second deformable volume containing a fluid. The method includes clamping the second deformable volume against the sealed package and determining a first pressure in the second deformable volume at a first moment and a second pressure at a second moment spaced in time. The method includes determining leak tightness of the sealed package on the basis of the first and second pressures.

With this method and system, the package to be tested does not need to be pierced. The method and system are thus directed to non-destructive testing. Further this method and system measure the pressure in the package indirectly via the second deformable volume. The method and system require that the package to be tested is deformable, which limits the scope of use. E.g. gable top cartons may not be suitable for use with this method and system, as the forces applied from the second deformable volume may be partly or fully absorbed by the structural integrity of the gable top carton, thus making the indirect pressure readings from the second volume inaccurate. The method is also sensitive for relative movement between the two volumes.

WO2015080601 discloses a seal testing apparatus for testing the integrity of a seal in the packaging of vacuum packed product and a method of testing seal integrity. The apparatus includes a mechanical gripper that grips a portion of the packaging and is urged away from the packaging. A sensor monitors the movement of the gripper relative to the vacuum-packed product and an evaluator compares the sensed movement of the gripper with an acceptable profile and accepts or rejects the product based on the comparison.

Leaks are thus detected by means of a gripper pulling in the packaging and a distance sensor measuring how far the gripper can pull the packaging relative to the packed product. This means that the apparatus and method will only work with a flexible packaging (e.g. made of plastic) and that the packed product must be in a solid state.

ASTM F2095- 07e1 *"*Standard test methods for pressure decay leak test for flexible packages with and without restraining plates", ASTM D6556-10, ASTM INTERNATIONAL, US, vol. 15.10, 1 January 2007 (2007-01-01), pages 1-6, XP008096350, ISSN: 0192-2998, DOI: 10.1520/F2095-01 discloses a test method for measurements of leaks in non-porous film, foil or laminate flexible pouches and foil-sealed trays. The testing apparatus comprises a means to enter a package so that an inflation pressure can be applied to the package and changes in internal pressure can be sensed. However, it is essential that said means provides a sufficiently leak-tight seal to the package.

GB2075202A discloses a method of testing for leaks in containers. A nozzle seals to the bung hole and air under pressure is introduced. The rate of increase of internal pressure during the testing operation is sensed by supporting members and compared to a preprogrammed rate of pressure increase, and if the rate of increase does not come up to a pre-set level, within a pre-set time, a leak is indicated, and the container can be rejected.

US4733555A discloses a pressure testing apparatus has a probe with a piercing tip. The probe sealingly engages a special entry port having a mating pressure-coupling body which establishes a sealing connection with the probe before the tip pierces the package. An adhesive sheet flange extends about the body of the entry port and sealingly secures the body to the package.

The present invention is directed to a method and a system that may solve or at least reduce at least one of the aforementioned problems or challenges.

According to one aspect, the present invention brings forward a method of testing leakage and/or strength of paperboard-based according to appended claim 1.

Said first pressure value may be within the range of 100 mbar to 500 mbar.

Said predetermined period of time may be within the range of 5 seconds to 30 seconds.

The step of attaching the nozzle to the through-opening comprises the sub-steps of:
- inserting a flexible sealing disk encircling a distal end of the nozzle into the container via the through-opening; and
- bringing the sealing disk into gas-tight engagement with an inner surface section of the container encircling the through-opening.

The step of attaching the nozzle to the through-opening may comprise the sub-steps of:
- bringing a support surface into engagement with an outer surface section of the container encircling the through-opening; and
- clamping the container between the support surface and the sealing disk.

The step of performing the first series of steps may comprise:
- calculating a difference in pressure between the first pressure value and the second pressure value; and
- using the calculated difference in pressure as a measure of leakage of the container.

The method may comprise the step of supporting side panels of the container. Thus, the container can be prevented from flexing or bulging during said first series of steps.

The method of producing the through-opening in the container may comprise the sub-steps of:
- receiving the container in a receptacle of a drilling or cutting apparatus; and
- producing a through-opening in the received container by means of a drilling or cutting device of the drilling or cutting apparatus.

The method may comprise the step of removing a food product from the container via the through-opening prior to performing said at least one of the first series of steps and the second series of steps.

According to yet a further aspect, the present invention brings forward a pressure testing apparatus for testing leakage and/or strength of a paperboard-based according to appended claim 10.

The pressure testing apparatus may further comprise a housing in which the nozzle is arranged, wherein the housing is adapted for receiving the container and attaching the nozzle to the container

The housing may comprise a support surface configured to be brought into engagement with an outer surface section of the container encircling the through-opening, and the support surface and the sealing disk may be configured to engage the container in a clamping motion, thus allowing the container to be clamped between the support surface and the sealing disk.

The nozzle may be arranged to the support surface and configured to stroking relative to the support surface.

The housing may comprise a support structure for supporting side wall panels of the received container during testing.

The pressure testing apparatus may comprise a portable power source for powering the pressure testing apparatus.

The pressure testing apparatus may comprise a computer program comprising instructions which, when the program is executed by a computer, cause the computer to instruct the pressure testing apparatus to carry out said first series of steps and/or said second series of steps.

According to a further aspect, the present invention brings forward a computer program comprising instructions which, when the program is executed by a computer installed in said pressure testing apparatus, cause the computer to instruct the pressure testing apparatus to carry out said first series of steps and/or said second series of steps.

According to yet a further aspect, the present invention brings forward a system for testing leakage and/or strength of a paperboard-based container, wherein the system comprises:
- a pressure testing apparatus as disclosed above; and
- a drilling or cutting apparatus for producing a through-opening in the container.
wherein the drilling and cutting apparatus comprises a receptacle for receiving a container and a drilling or cutting device for producing a through-opening, for attachment of the nozzle, in the received container.

Above-discussed preferred and/or optional features of each aspect of the invention may be used, alone or in appropriate combination, in the other aspects of the invention.

Following drawings are appended to facilitate the understanding of the invention:
Fig. 1 shows a paperboard-based container for a pourable food-product.
Fig. 2 shows the paperboard-based container and a drilling and cutting apparatus.
Fig. 3 shows the paperboard-based container with a through-opening.
Figs. 4-8 illustrate a pressure testing apparatus according to one embodiment in operation.
Fig. 9 is a flowchart schematically illustrating a method of testing a paperboard-based container.
Fig. 10 schematically illustrates a container testing system.

It should be understood, however, that the drawings are not intended to limit the invention to the subject-matter depicted in the drawings.

In the drawings, like reference numerals have been used to indicate common parts, elements or features unless otherwise explicitly stated or implicitly understood by the context.

In the following, one or more specific embodiments of the invention will be described in more detail with reference to the drawings. However, it is specifically intended that the invention is not limited to the embodiments and illustrations contained herein but includes modified forms of the embodiments including portions of the embodiments and combinations of elements of different embodiments as come within the scope of the following claims.

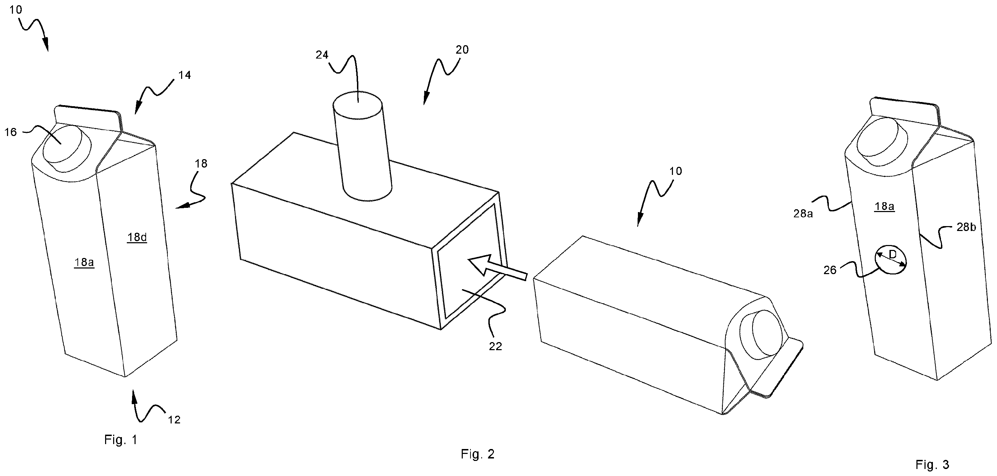

Fig. 1 shows a paperboard-based container 10 for a pourable food-product. As is known in the art, such containers are produced from a laminate packaging material, which typically comprises a multi-ply paperboard sheet on which is laminated one or a plurality of barrier layers for holding the food product and/or prevent migration of air and flavours through the paperboard. A barrier layer may typically comprise a polyethylene or an aluminium layer.

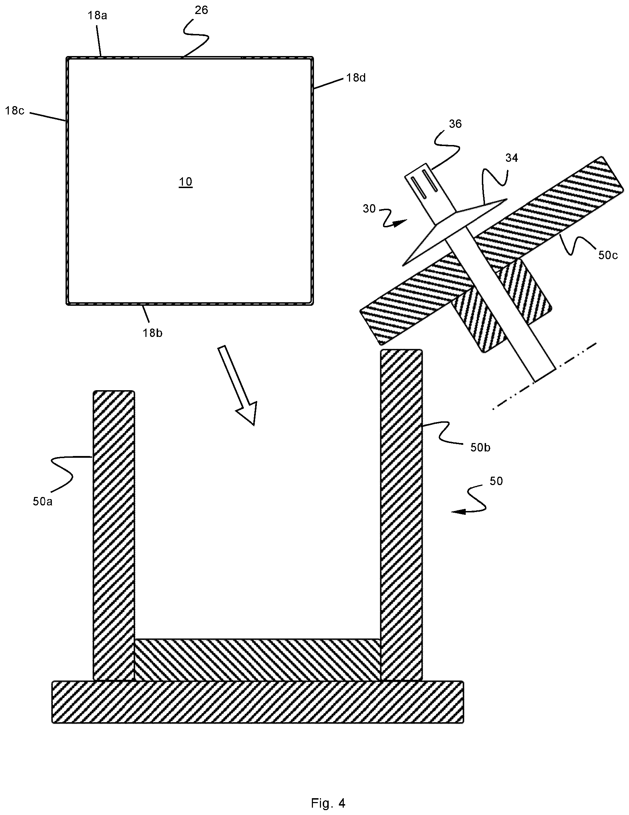

As is known in the art, paperboard-based container can have many forms. Generally, however, such containers have a substantially flat bottom panel 12, forming a bottom of the container, a top panel 14, forming a top of the container and sometimes comprising a closure device 16 sealing an opening for dispensing the food product, and side panels 18 extending between the bottom panel 12 and the top panel 14. The number and shape of the side panels may vary depending on container type. In the disclosed embodiment, the container 10 has a substantially quadrangular cross-section and the side panels comprise a front panel 18a, a rear panel 18b and two lateral panels 18c, 18d (see also Fig. 4).

The container 10 is a gable-top container. As is known in the art, such a container is produced from a carton blank that is folded and filled with the food product in a filling machine. As is also known in the art, paperboard-based containers may alternatively be made in a roll-fed process.

Irrespective of the process by which containers are produced, there is a need to verify that the produced containers are capable of holding the food product in an intended manner. This can be done by sampling produced containers and verifying the food product holding capability of the sampled containers. As is known in the art, in particular the top and bottom panels of the container may be prone to leakage.

In the following, an embodiment of method for verifying the food product holding capability of the gable-top container 10 disclosed in Fig. 1 will be discussed. It is to be understood, however, that the method can be used also for verifying the food product holding capability of roll-fed containers. Also, it is to be understood that the method can be applied also to containers, gable-top or roll-fed, having shapes and forms other than the container 10 disclosed in Fig. 1.

The first step according to the present embodiment of the method is to obtain a sample of a sealed container 10. This can be done by taking a sample from the stream of containers produced in a filling machine. In such a case, the sampled container will be filled with the food product. Alternatively, a container sample can be obtained by running the filling machine without filling the container with the food product, in which case a sealed but empty container is obtained.

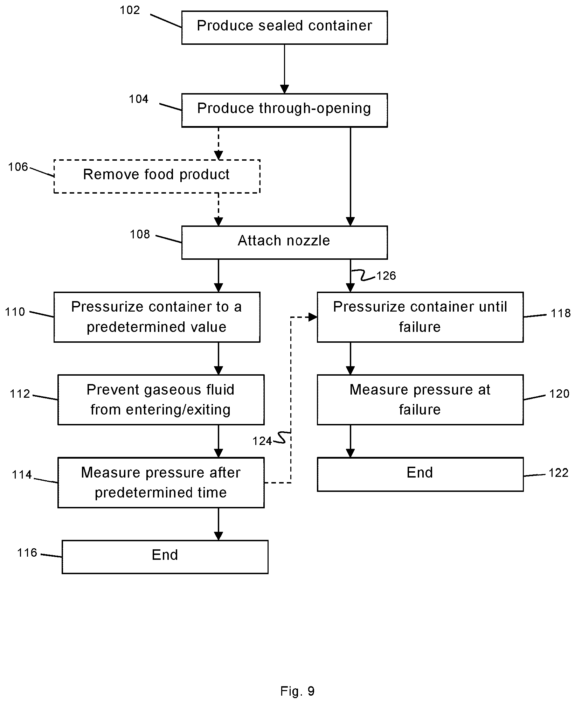

Consequently, with reference also to Fig. 9 which is a flowchart schematically illustrating the present embodiment of the method, the first step 102 of the method is to produce a sealed container. The produced container may be empty or filled with a food product.

The next step 104 is to produce a through-opening in the container 10. This may be effectuated using a drilling or cutting apparatus, e.g. the apparatus 20 illustrated in Fig. 2. The apparatus 20 comprises a receptacle or cavity 22 having a cross-section with dimensions that substantially correspond to the dimensions of the cross-section of the container 10. The receptacle 22 has a back-stop (not visible) ensuring that the container 10 can be inserted into the receptacle 22 to a precise depth.

The back-stop and the receptacle, by virtue of having a cross-section substantially corresponding to the cross-section of the container 10, allow containers to be positioned in the apparatus 20 in a precise and repeatable manner, thus allowing containers having the same form to be positioned in the apparatus 20 in a common cutting or drilling position.

The apparatus 20 also comprises a drilling or cutting device 24 arranged to drill or cut a through-opening or hole in the container 10 when it is positioned in the apparatus 20 in a drilling or cutting position. In the present embodiment of the apparatus 20, the drilling or cutting device 24 is positioned above the receptacle 22, thereby allowing a drilling or cutting bit (not visible in Fig. 2) of the device 24 to be brought down into the receptacle 20 from above.

When producing a through-opening in the container 10, the container 10 is introduced in the receptacle 22 and brought to a drilling or cutting position, in which the bottom panel 12 of the container 10 is in contact with the back-stop. In the present example embodiment, the container 10 is positioned in the apparatus 20 with the front panel 18a facing upwards.

When the container 10 is in the drilling or cutting position, the drilling or cutting device 24 is activated and the drilling or cutting bit is brought downwards to drill or cut the through-opening in the container. By virtue of the through-opening being drilled or cut in a side panel of the container facing upwards in the apparatus 20, spillage of any food product in the container 10 can be minimized.

The drilling or cutting device 24 may comprise an electric motor configured to rotate the drilling or cutting bit in a drilling or cutting motion during the drilling or cutting operation. The device 24 may also comprise actuators, e.g. electric or pneumatic actuators, configured to actuate the drilling or cutting bit vertically during the drilling or cutting operation. Alternatively, the vertical actuation of the drilling or cutting bit may be effectuated manually.

After the through-opening has been drilled or cut, the drilling or cutting bit is raised and the container 10 is removed from the apparatus 20. If the container 10 contains a food product, the food product may then be removed from the container 10 via the through-opening, as is illustrated in step 106 in Fig. 9.

In the example container 10, the through-opening 26 (see Fig. 3) is drilled or cut substantially centrally in the front panel 18a, i.e. substantially equidistant from the bottom 12 and top panel 14, and/or substantially equidistant from corner edges 28a and 28b of the container 10. Whereas this may be a suitable position for the through-opening 26 in the present example container 10, it is to be understood that the position of the through-opening in containers having other forms and/or shapes may be different. Generally, however, the through-opening should advantageously be positioned at a distance from crease lines, embossing patterns or other indentations in the side panel surface. For example, the through-opening may be positioned at least 10 mm, and more preferable at least 20 mm, from such crease lines, embossing patterns and indentations. Also, the region of the through-opening should preferably be substantially flat.

In the example container 10, the through-opening 26 is circular and has a diameter D that is within the range of 20 mm to 35 mm. It is to be understood, however, that the through-opening may have other dimensions and/or shapes, in particular in containers having side panels with shapes and/or forms differing from the shape and form of the front panel 18a of container 10.

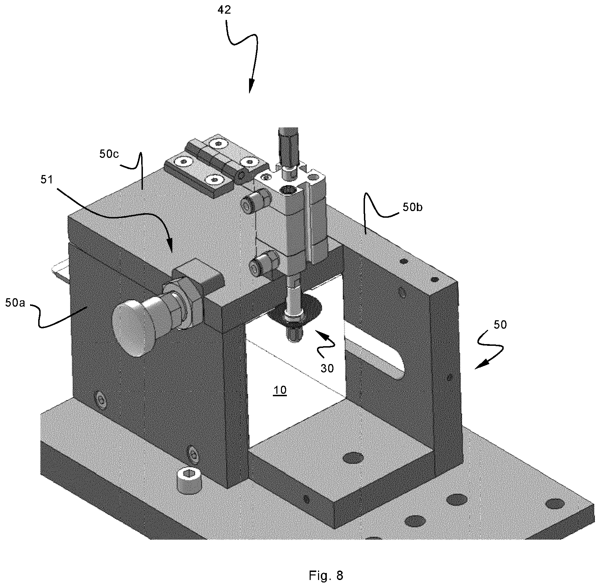

When the through-opening 26 has been produced in the container 10 and any food product in the container has been removed, the container is positioned in a pressure testing apparatus 42 (see Fig. 8) and a nozzle 30 is attached to the through-opening 26 in a gas-tight manner (see Figs. 4 to 7), i.e. in a manner that sealingly connects the nozzle 30 to the through-opening and prevents leakage of a gaseous fluid between the nozzle 30 and the container 10. In Fig. 9, this step is illustrated as 108. Attachment of the nozzle 30 to the through-opening 26 in a gas-tight manner may be effectuated in many ways. However, the nozzle 30 may advantageously have a distal end 36 and an annular, flexible sealing disk 34 sealingly attached to and arranged circumferentially about the distal end 36. The distal end 36 may have a lateral extension allowing the distal end 36 to fit within the through-opening 26, and the disk 34 may have a lateral extension that is sufficiently large to allow the disk 34 to cover the through-opening. The distal end 36 may for example have a substantially circular cross-section having a diameter that is less than the diameter D of the through-opening 26, and the sealing disk 34 may have a circular, outer border having a diameter that is larger than the diameter D of the through-opening 26.

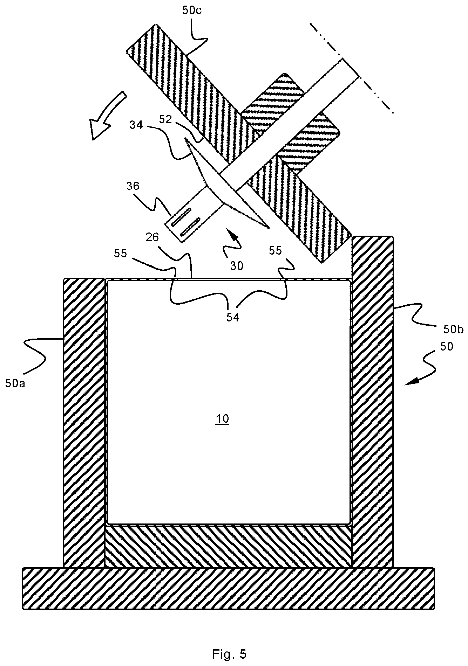

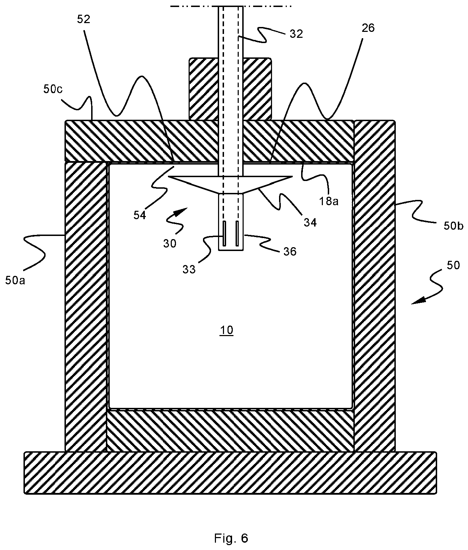

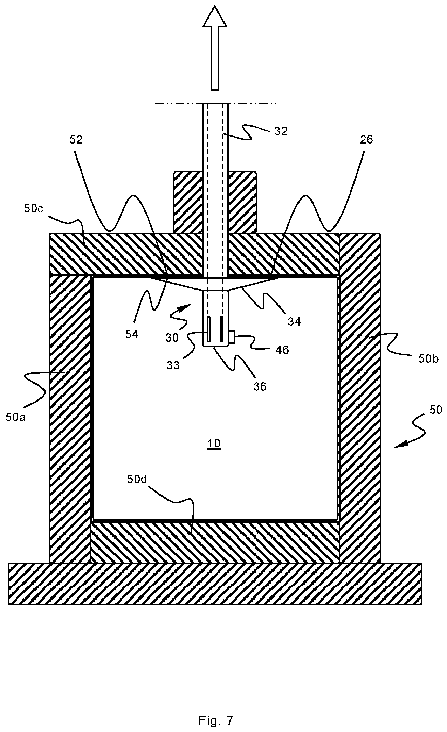

This allows the distal end 36 and the disk 34 to be inserted through the through-opening 26, as is illustrated in Figs. 5 and 6, and the disk 34 to be brought into sealing engagement with a section 54 of the inside surface of the container 10 surrounding the through-opening 26, as is illustrated in Fig. 7. Since the sealing disk 34 has a diameter that is larger than the diameter of the through-opening 26, a lubricant, e.g. silicon oil, may be applied on a section of the outside surface of the container 10 surrounding the through-opening, such that insertion of the disk 34 through the through-opening 26 is facilitated.

Once the disk 34 has been brought through the through-opening 26, the movement of the tube/disk assembly is reversed such that the disk 34 is brought into contact with the inside surface of the carton 10, covering the through-opening 26. In order to be able to provide a gas-tight seal against the inside surface of the container in this position, the disk 34 should have a lateral extent allowing the disk to overlap the through-opening in all directions. At the same time, the lateral extent of the disk 34 must not prohibit the insertion of the disk through the through-opening 24. In embodiments where the through-opening 26 and the disk 34 are circular, it has been found that a gas-tight seal can be achieved while allowing the disk to be inserted into the through-opening if the disk has a radius that is approximately 2.5 mm larger than the radius of the through-opening 26.

The pressure testing apparatus 42 may have a housing 50 configured to hold the container during pressure test procedure. As illustrated in Figs. 4-8, the apparatus 42 may comprise wall sections and the nozzle 30 may be arranged in one of the wall sections. Like the apparatus 20, the housing 50 may have a cross-section with internal dimensions that substantially correspond to the dimensions of the cross-section of the container 10.

In the embodiment shown in Figs. 4-8, the housing 50 comprises parallel side walls 50a and 50b, a lid section 50c and a base section 50d. The nozzle 30 is arranged in the lid section 50c and this section 50c is hinged to side wall 50b. In other embodiments, the nozzle may be arranged stationary in one of the side walls, in which case the opposite side wall may be detachably connected or hinged to the rest of the housing in order to allow the container to be placed in the common testing position. In such an embodiment, it is the container that is brought over the nozzle instead of the nozzle being brought through the through-opening.

The housing 50 can be operated between an open position and a closed position. In the open position, the lid section 50c is separated from wall sections 50a and 50b allowing a container to be positioned in the housing, as is illustrated in Fig. 4. In the closed position, the side wall of the housing 50 supports the outer side walls 18 of the container 10. As illustrated in Fig. 8, a locking device 51 can be provided to keep the housing 50 closed.

When the housing 50 is in the open position (see Fig. 4), the container 10 can be placed in the housing 50 and positioned so that the through-opening 26 is aligned with the nozzle 30. The housing 50 may comprise alignment means, e.g. alignment markings (not illustrated), ensuring that the container 10 is properly aligned in the housing. The alignment means and the housing 50, by virtue of having a cross-section substantially corresponding to the cross-section of the container 10, allow containers to be positioned in the housing 50 in a precise and repeatable manner, thus allowing containers having the same form to be positioned in the housing 50 in a common testing position.

With the container 10 placed into the housing 50, the housing is closed. During the pivotal travel of the lid section 50c from the open position to the closed position (see Figs. 4-6), the nozzle 30 will enter the through-opening 26. The longitudinal extension of the nozzle 30 is adapted to allow the distal end 36 of the nozzle 30 to enter the through-opening 30. The distal end 36 of nozzle 30 has a smaller diameter than the through-opening 26 and will thus easily enter the through-opening. As stated above, the disc 34 has a larger diameter than the through-opening 26 in the container 10 and will therefore elastically deform during entry through said through-opening 26. The force required to bring the disk 34 through the through-opening will depend on the diameter, thickness and material of the disc 34. The required force should not jeopardize damaging of the container 10, e.g. tearing the edge of the through-opening 26. The disk may advantageously be made from silicon and may advantageously have a Shore A hardness of 60. A lubricant, e.g. silicon oil, may be applied on the section of the outside surface of the container 10 surrounding the through-opening to facilitate the insertion of the disk 34 through the through-opening 26. Alternatively, or in addition, the disk 34 may have a frustoconical shape in order to facilitate the insertion of the disk 34. The frustoconical shape will also contribute to centre the nozzle 30 in the through-opening 26 during said insertion.

When the housing 50 is closed, the distal end 26 of the nozzle 30 and the disc 34 is located inside the container 10 (see Fig. 6). Since the disc 34 will elastically deform during entry through the through-opening 26, it must be brought a certain distance past side panel 18a, i.e. the side panel comprising the through-opening 26. It will therefore typically be located at a distance from the inner surface of the side panel 18a immediately after entry through the through-opening 26. At this stage the disc 34 is not necessarily sealing against the inner surface of side panel 18a. Once the disk 34 has entered through the through-opening 26, the movement of the nozzle 30 is therefore reversed, bringing the disk 34 into gas-tight engagement with the inner annular surface section 54 of the panel 18a encircling the through-opening 26. When the disc 34 is brought into gas-tight engagement with the annular surface section 54, the inner surface of the lid section 50c provides a support surface or an abutment surface 52 for the disc 34. Consequently, when the disc 34 is brought into engagement with the inner surface of the panel 18a the panel 18a becomes sandwiched between the disc 34 and the support surface 52 formed by the lid section 50c. In particular, the sealing disk 34 is brought into gas-tight engagement with the inner surface section 54 of the container 10 encircling the through-opening 26 and the support surface 55 is brought into engagement with an outer surface section 55 of the container 10 encircling the through-opening 26 (se Fig. 5).

In order to ensure the gas-tight engagement between the surface section 54 and the disk 34, the disk 34 should advantageously overlap the through-opening 26, i.e. extend beyond the lateral extent of the through-opening, by at least 2 mm. However, in order to facilitate insertion of the disk 34 through the through-opening 26 preferably the overlap should not be more than 5 mm.

The nozzle 30 comprises a conduit 32 which, at one end, is connected to a pressure unit 44. At the other end the conduit 32 opens into apertures 33 in the distal end 36 of the nozzle 30 (see Figs. 6 and 7).

Once the nozzle 30 has been attached to the through-opening 26, the container can be pressure tested, e.g. tested for leakage and strength.

Fig. 7 shows a container 10 positioned in the housing 50 and ready for testing. In the following, two examples of pressure testing of the container will be discussed, namely leakage testing and strength testing.

When performing a leakage test, a gaseous fluid is injected into the container 10. The gaseous fluid is supplied to the inside of the container 10 through the apertures 33 which is in fluid communication with the pressure unit via the conduit 32. The pressure unit may comprise a pump or a pressure tank. The pressure unit may be supplied with ambient air, nitrogen or any other gaseous fluid.

A pressure sensor is used to measure the pressure inside the container 10. The pressure sensor 46 may be arranged at the distal end of the nozzle (see Fig. 7).

In the leakage test, the pressure in the container 10 is increased by injecting the gaseous fluid into the container 10 until a predetermined, first pressure value p₁ is obtained in the container. In Fig. 9 this step is illustrated as 110. The first pressure value p₁ may be within the range of 100 mbar to 500 mbar.

When the first pressure value p₁ is obtained in the container 10, the gaseous fluid is prevented from entering or exiting the container 10 via the nozzle 30, as is indicated in step 112 in Fig. 9. This can be achieved by isolating the pressure source from the inner volume of the container 10. A valve (not shown) may be used to isolate the container 10 from the pressure source. The valve may preferably be arranged at the nozzle 30 but may alternatively be arranged in the pressure tank or anywhere along the conduit 32.

Consequently, according to one embodiment of the method a valve (not shown) in the nozzle 30 is closed to prevent gaseous fluid from entering or exiting the container 10 via the nozzle 30 when the first pressure value p₁ has been obtained in the container 10.

At a predetermined time t_{wait} after the gaseous fluid has been prevented from entering or exiting the container 10 via the nozzle 30, a second pressure value p₂ is measured in the container 10 and the difference in pressure between the first pressure value p₁ and the second pressure value p₂, i.e. p_{drop} = p₁ - p₂, is used as a measure of leakage of the container. In Fig. 9 this step is illustrated at 114.

The predetermined time t_{wait} may typically be within the range of 5 s to 30 s.

Throughout the test, the pressure inside the container 10 may be continuously measured and logged and at t_{wait} the difference in pressure p_{drop} = p₁ - p₂ may be calculated.

The measured leakage is evaluated based on comparison with target values. If the container 10 has a leakage below a given target value, the container is considered to have passed the test.

If no further test is required, the test procedure may then be terminated, as is illustrated in step 116.

When performing the strength test, the pressure in the container 10 is increased by injecting a gaseous fluid into the container 10. This is performed in the same manner as for the leakage test. The equipment and test setup of the leakage test is typically used also for the strength test. While pressurizing the container 10, the pressure inside the container 10 can be continuously measured. Unlike the leakage test, however, the pressurizing of the container 10 is not stopped at a given first pressure value. Instead the pressure is increased until the container 10 fails and the pressure value at failure, i.e. the maximum pressure value pₘₐₓ obtained in the container 10 prior to the container 10 failing, is measured, as is indicated in steps 118 and 120 in Fig. 9. The maximum pressure value pₘₐₓ is then used a measure of the strength of the container 10 and of corresponding containers having the same design. The test procedure may then be terminated, as is illustrated in step 116.

The strength test may follow the leakage test in a combined leakage-strength test sequence, as is indicated by dashed line 124 in Fig. 9. Alternatively, a strength test may be performed on a container without the container previously having been subjected to a leakage test, as is indicated by line 126 in Fig. 9.

In order to prevent or at least minimize that bulging or flexing of the container 10 results in erroneous pressure value readings, especially during the leakage test, it may be advantageous that the side panels 18 of the container 10 are supported at least during steps 110 to 114. In the apparatus shown in Figs. 4-8, a substantial section of each side panel 18a-18d is supported (by side walls 50a, 50b, lid portion 50c and base portion 50d). However, in other embodiments only a minor portion of the container side panels may be supported or, depending on the container design, only some but not all side panels.

The bottom panel 12 and the top panel 14 are usually sufficiently stiff to prevent bulging or flexing during the leakage test. Therefore, there is no need to support these panels during steps 110 to 114. Also, since it is the bottom and top panels that are most susceptible to breakage, these panels should preferably not be supported during the breakage test (steps 118 and 120). Supporting the bottom and top panels will risk giving too high a pressure value at failure of the container.

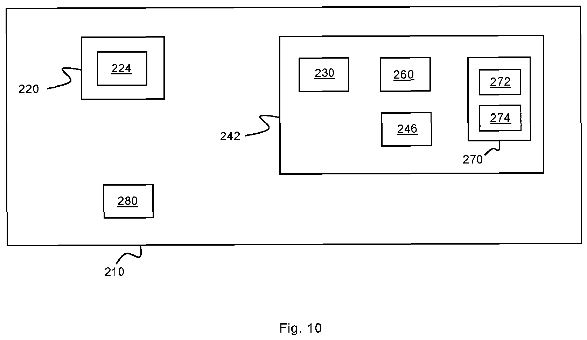

Fig. 10 schematically illustrates a container testing system 210 according to one embodiment of the present invention.

The system 210 comprises a drilling or cutting apparatus 220 having a drilling or cutting device 224 configured for drilling or cutting a through-opening in a paperboard-based container. The drilling or cutting apparatus 220 may be of the same type as is disclosed in Fig. 2.

The system 210 further comprises pressure testing apparatus 242 having a nozzle 230 configured to be attached to the through-opening of the container in a gas-tight manner. The pressure testing apparatus 242 may be of the same type as is disclosed in Figs. 4 to 8.

The pressure testing apparatus 242 may comprises a pressure sensor 246 configured to measure the pressure inside a container arranged in the apparatus 242 and a pressure unit 260 configured to supply a pressurised gaseous fluid to the nozzle 230.

The pressure testing apparatus 242 may also comprise a control system 270 communicating with the pressure sensor 46 and the pressure unit, for controlling the pressure applied to the inside of the container. The control system 270 typically comprises a computer 272 having a central processing unit configured to run a computer program. The computer program may comprise instructions which, when the program is executed by the control system 270, cause the control system to carry out the steps of the above-described leakage test and/or the strength test.

The control system 270 may be operated by an input/output terminal 274, e.g. comprising push buttons and/or a touch screen.

All the components of the pressure testing apparatus 242 and optionally also the drilling or cutting apparatus 220 may be assembled in one cabinet and provided with wheels for portability. If the pressure testing apparatus 242 and/or the drilling or cutting apparatus 220 is configured for portability, the container testing system 210 may preferably comprise a portable power source 280, such as a battery.

In the preceding description, various aspects of the method and apparatus according to the invention have been described with reference to the illustrative embodiment. For purposes of explanation, specific numbers, systems and configurations were set forth in order to provide a thorough understanding of the apparatus and its workings. However, this description is not intended to be construed in a limiting sense. Various modifications and variations of the illustrative embodiment, as well as other embodiments of the apparatus, which are apparent to person skilled in the art to which the disclosed subject-matter pertains, are deemed to lie within the scope of the present invention as defined by the following claims.

## Claims

1. A method of testing leakage and/or strength of paperboard-based containers,
**characterised by** the steps of:
- producing a sealed paperboard-based container (10);
- producing a through-opening (26) in a panel (12, 14, 18) of the container (10); and
- attaching a nozzle (30) to the through-opening (26);
which method further comprises performing at least one of a first series of steps and a second series of steps, wherein the first series of steps comprises:
- increasing pressure in the container (10) by injecting a gaseous fluid into the container (10) via the nozzle (30) until a predetermined, first pressure value (p₁) is obtained in the container (10);
- when the first pressure value (p₁) is obtained in the container (10), closing the nozzle (30) preventing gaseous fluid from entering or exiting the container (10) via the nozzle (30);
- at a predetermined period of time (t_{wait}) after closure of the nozzle (30), measuring a second pressure value (p₂) in the container (10); and
- using a difference in pressure (p_{drop}) between the first pressure value (p₁) and the second pressure value (p₂) as a measure of leakage of the container (10),
and wherein the second series of steps comprises:
- increasing pressure in the container (10) by injecting a gaseous fluid into the container (10) via the nozzle (30) until the container (10) fails;
- measuring the maximum pressure value (pₘₐₓ) obtained in the container (10) prior to the container (10) failing; and
- using the maximum pressure value (pₘₐₓ) as a measure of the strength of the container (10),
wherein the step of attaching the nozzle (30) to the through-opening (26) comprises the sub-steps of:
- inserting a flexible sealing disk (34) encircling a distal end (36) of the nozzle (30) into the container (10) via the through-opening (26); and
- bringing the sealing disk (34) into gas-tight engagement with an inner surface section (54) of the container (10) encircling the through-opening (26).

2. The method according to claim 1, wherein the step of attaching the nozzle (30) to the through-opening (26) comprises the sub-steps of:
- bringing a support surface (52) into engagement with an outer surface section (55) of the container (10) encircling the through-opening (26); and
- clamping the container (10) between the support surface (52) and the sealing disk (34).

3. The method according to any one of the preceding claims, wherein performing the first series of steps comprises:
- calculating a difference in pressure (p_{drop}) between the first pressure value (p₁) and the second pressure value (p₂); and
- using the calculated difference in pressure (p_{drop}) as a measure of leakage of the container (10).

4. The method according to any one of the preceding claims, comprising the step of supporting side panels (18) of the container (10).

5. The method according to any one of the preceding claims, wherein the method further comprises the step of:
- plotting and logging a pressure graph during the first series of steps and/or the second series of steps.

6. The method according to any one of the preceding claims, wherein the step of producing a through-opening in the container (10) comprises the sub-steps of:
- receiving the container (10) in a receptacle (22) of a drilling or cutting apparatus (20); and
- producing a through-opening (15) in the received container (10) by means of a drilling or cutting device (24) of the drilling or cutting apparatus (20).

7. The method according to any one of the preceding claims comprising the step of:
- removing a food product from the container (10) via the through-opening (26) prior to performing said at least one of the first series of steps and the second series of steps.

8. The method according to any one of the preceding claims, wherein said first pressure value (p₁) is within the range of 100 mbar to 500 mbar.

9. The method according to any one of the preceding claims, wherein said predetermined period of time (t_{wait}) is within the range of 5s to 30s.

10. A pressure testing apparatus (42, 242) for testing leakage and/or strength of a paperboard-based container (10), **characterized in that** the pressure testing apparatus (42) comprises:
- a nozzle (30, 230) adopted to be brought into gas-tight engagement with a through-opening (26) drilled or cut in a panel (12, 14, 18) of the container (10);
- a pressure unit (44) in fluid communication with the nozzle (30), for increasing pressure in the container (10);
- a pressure sensor (46) for monitoring the pressure inside the container (10);
- a control system (48) communicating with the pressure sensor (46) and the pressure unit (44), for controlling the applied pressure to the inside of the container (10),
wherein the nozzle (30) comprises a flexible sealing disk (34) encircling a distal end (36) of the nozzle (30), which sealing disk (34) is configured to be brought into gas-tight engagement with an inner surface section (54) of the container (10) encircling the through-opening (26).

11. The pressure testing apparatus (42, 242) according to claim 10, wherein the pressure testing apparatus (42) further comprises a housing (50) in which the nozzle (30) is arranged, wherein the housing (50) is adapted for receiving the container (10) and attaching the nozzle (30) to the container (10).

12. The pressure testing apparatus (42) according to claim 11, wherein the housing (50) comprises a support surface (52) configured to be brought into engagement with an outer surface section (55) of the container (10) encircling the through-opening (26), and wherein the support surface (52) and the sealing disk (34) are configured to engage the container (10) in a clamping motion.

13. The pressure testing apparatus (42) according to any one of claims 11 and 12, wherein the housing (50) comprises a support structure for supporting side wall panels (18) of the received container (10) during testing.

14. The pressure testing apparatus (42) according to any one of claims 10-13, wherein the pressure testing apparatus (42) comprises:
- a computer program comprising instructions which, when the computer program is executed by a computer (272), cause the computer (272) to instruct the pressure testing apparatus (42) to carry out the first series of steps and/or the second series of steps of the method according to any one of claims 1-9.

15. A computer program comprising instructions which, when the program is executed by a computer (272) installed in a pressure testing apparatus (42, 242) according to any one of claims 11-14, cause the computer (272) to instruct the pressure testing apparatus (42, 242) to carry out the first series of steps and/or the second series of steps according to any one of claims 1-9.

16. A system for testing leakage and/or strength of a paperboard-based container (10), **characterized in that** the system comprises:
- a pressure testing apparatus (42) according to any one of claims 11-14; and
- a drilling or cutting apparatus (20) for producing a through-opening (26) in the container (10),
wherein the drilling and cutting apparatus (20) comprises a receptacle (22) for receiving a container (10) and a drilling or cutting device (24) for producing a through-opening (26), for attachment of the nozzle (30), in the received container (10).

## Patentansprüche

1. Verfahren zur Prüfung der Undichtheit und/oder Festigkeit von pappebasierten Behältern, **gekennzeichnet durch** die folgenden Schritte:
- Herstellen eines versiegelten pappebasierten Behälters (10) ;
- Herstellen einer Durchgangsöffnung (26) in einer Platte (12, 14, 18) des Behälters (10); und
- Anbringen einer Düse (30) an der Durchgangsöffnung (26) ;
wobei das Verfahren ferner das Durchführen mindestens einer aus einer ersten Reihe von Schritten und einer zweiten Reihe von Schritten umfasst, wobei die erste Reihe von Schritten Folgendes umfasst:
- Erhöhen des Drucks in dem Behälter (10) durch Einspritzen eines gasförmigen Fluids in den Behälter (10) über die Düse (30), bis ein vorbestimmter erster Druckwert (p₁) in dem Behälter (10) erreicht ist;
- wenn der erste Druckwert (p₁) in dem Behälter (10) erreicht ist, Schließen der Düse (30), um zu verhindern, dass gasförmiges Fluid über die Düse (30) in den Behälter (10) eintritt oder aus ihm austritt;
- nach einer vorbestimmten Zeitspanne (t_{wait}) nach dem Schließen der Düse (30) Messen eines zweiten Druckwerts (p₂) in dem Behälter (10); und
- Verwenden einer Druckdifferenz (p_{drop}) zwischen dem ersten Druckwert (p₁) und dem zweiten Druckwert (p₂) als ein Maß für die Undichtheit des Behälters (10),
und wobei die zweite Reihe von Schritten Folgendes umfasst:
- Erhöhen des Drucks in dem Behälter (10) durch Einspritzen eines gasförmigen Fluids in den Behälter (10) über die Düse (30), bis der Behälter (10) versagt;
- Messen des maximalen Druckwerts (pₘₐₓ), der in dem Behälter (10) vor dem Versagen des Behälters (10) erreicht wird; und
- Verwenden des maximalen Druckwerts (pₘₐₓ) als ein Maß für die Festigkeit des Behälters (10),
wobei der Schritt des Anbringens der Düse (30) an der Durchgangsöffnung (26) die folgenden Unterschritte umfasst:
- Einführen einer flexiblen Dichtungsscheibe (34), die ein distales Ende (36) der Düse (30) umgibt, in den Behälter (10) über die Durchgangsöffnung (26); und
- Bringen der Dichtungsscheibe (34) in gasdichten Eingriff mit einem inneren Oberflächenabschnitt (54) des Behälters (10), der die Durchgangsöffnung (26) umgibt.

2. Verfahren nach Anspruch 1, wobei der Schritt des Anbringens der Düse (30) an der Durchgangsöffnung (26) die folgenden Unterschritte umfasst:
- Ineingriffbringen einer Stützfläche (52) mit einem äußeren Oberflächenabschnitt (55) des Behälters (10), der die Durchgangsöffnung (26) umgibt; und
- Einklemmen des Behälters (10) zwischen der Stützfläche (52) und der Dichtungsscheibe (34).

3. Verfahren nach einem der vorhergehenden Ansprüche, wobei das Durchführen der ersten Reihe von Schritten Folgendes umfasst:
- Berechnen einer Druckdifferenz (p_{drop}) zwischen dem ersten Druckwert (p₁) und dem zweiten Druckwert (P₂); und
- Verwenden der berechneten Druckdifferenz (p_{drop}) als ein Maß für die Undichtheit des Behälters (10).

4. Verfahren nach einem der vorhergehenden Ansprüche, umfassend den Schritt des Stützens von Seitenplatten (18) des Behälters (10).

5. Verfahren nach einem der vorhergehenden Ansprüche, wobei das Verfahren ferner den folgenden Schritt umfasst:
- Aufzeichnen und Protokollieren einer Druckkurve während der ersten Reihe von Schritten und/oder der zweiten Reihe von Schritten.

6. Verfahren nach einem der vorhergehenden Ansprüche, wobei der Schritt des Herstellens einer Durchgangsöffnung in dem Behälter (10) die folgenden Unterschritte umfasst:
- Aufnehmen des Behälters (10) in einer Aufnahme (22) einer Bohr- oder Schneidvorrichtung (20); und
- Herstellen einer Durchgangsöffnung (15) in dem aufgenommenen Behälter (10) mittels einer Bohr- oder Schneideinrichtung (24) der Bohr- oder Schneidvorrichtung (20).

7. Verfahren nach einem der vorhergehenden Ansprüche, umfassend den folgenden Schritt:
- Entfernen eines Lebensmittelprodukts aus dem Behälter (10) über die Durchgangsöffnung (26) vor der Durchführung der wenigstens einen aus der ersten Reihe von Schritten und der zweiten Reihe von Schritten.

8. Verfahren nach einem der vorhergehenden Ansprüche, wobei der erste Druckwert (p₁) im Bereich von 100 mbar bis 500 mbar liegt.

9. Verfahren nach einem der vorhergehenden Ansprüche, wobei die vorbestimmte Zeitspanne (t_{wait}) im Bereich von 5 s bis 30 s liegt.

10. Druckprüfvorrichtung (42, 242) zum Prüfen der Undichtheit und/oder Festigkeit eines pappebasierten Behälters (10), **dadurch gekennzeichnet, dass** die Druckprüfvorrichtung (42) Folgendes umfasst:
- eine Düse (30, 230), die dafür eingerichtet ist, in gasdichten Eingriff mit einer Durchgangsöffnung (26) gebracht zu werden, die in eine Platte (12, 14, 18) des Behälters (10) gebohrt oder geschnitten ist;
- eine Druckeinheit (44) in Fluidverbindung mit der Düse (30) zum Erhöhen des Drucks in dem Behälter (10);
- einen Drucksensor (46) zum Überwachen des Drucks im Inneren des Behälters (10);
- ein mit dem Drucksensor (46) und der Druckeinheit (44) in Verbindung stehendes Steuersystem (48) zum Steuern des auf das Innere des Behälters (10) ausgeübten Drucks,
wobei die Düse (30) eine flexible Dichtungsscheibe (34) umfasst, die ein distales Ende (36) der Düse (30) umgibt, wobei die Dichtungsscheibe (34) dafür ausgelegt ist, in gasdichten Eingriff mit einem inneren Oberflächenabschnitt (54) des Behälters (10) gebracht zu werden, der die Durchgangsöffnung (26) umgibt.

11. Druckprüfvorrichtung (42, 242) nach Anspruch 10, wobei die Druckprüfvorrichtung (42) ferner ein Gehäuse (50) umfasst, in dem die Düse (30) angeordnet ist, wobei das Gehäuse (50) zur Aufnahme des Behälters (10) und zum Anbringen der Düse (30) an dem Behälter (10) eingerichtet ist.

12. Druckprüfvorrichtung (42) nach Anspruch 11, wobei das Gehäuse (50) eine Stützfläche (52) umfasst, die dafür ausgelegt ist, mit einem äußeren Oberflächenabschnitt (55) des Behälters (10), der die Durchgangsöffnung (26) umgibt, in Eingriff gebracht zu werden, und wobei die Stützfläche (52) und die Dichtungsscheibe (34) dafür ausgelegt sind, mit dem Behälter (10) in einer Klemmbewegung in Eingriff zu kommen.

13. Druckprüfvorrichtung (42) nach einem der Ansprüche 11 und 12, wobei das Gehäuse (50) eine Stützstruktur zum Stützen von Seitenwandplatten (18) des aufgenommenen Behälters (10) während der Prüfung umfasst.

14. Druckprüfvorrichtung (42) nach einem der Ansprüche 10 bis 13, wobei die Druckprüfvorrichtung (42) Folgendes umfasst:
- ein Computerprogramm, das Befehle umfasst, die, wenn das Computerprogramm von einem Computer (272) ausgeführt wird, den Computer (272) veranlassen, die Druckprüfvorrichtung (42) anzuweisen, die erste Reihe von Schritten und/oder die zweite Reihe von Schritten des Verfahrens nach einem der Ansprüche 1 bis 9 auszuführen.

15. Computerprogramm, das Befehle umfasst, die, wenn das Programm von einem Computer (272) ausgeführt wird, der in einer Druckprüfvorrichtung (42, 242) nach einem der Ansprüche 11 bis 14 installiert ist, den Computer (272) veranlassen, die Druckprüfvorrichtung (42, 242) anzuweisen, die erste Reihe von Schritten und/oder die zweite Reihe von Schritten nach einem der Ansprüche 1 bis 9 auszuführen.

16. System zum Prüfen der Undichtheit und/oder Festigkeit eines pappebasierten Behälters (10), **dadurch gekennzeichnet, dass** das System Folgendes umfasst:
- eine Druckprüfvorrichtung (42) nach einem der Ansprüche 11 bis 14; und
- eine Bohr- oder Schneidvorrichtung (20) zum Herstellen einer Durchgangsöffnung (26) in dem Behälter (10),
wobei die Bohr- und Schneidvorrichtung (20) eine Aufnahme (22) zum Aufnehmen eines Behälters (10) und eine Bohr- oder Schneideinrichtung (24) zum Herstellen einer Durchgangsöffnung (26) zum Anbringen der Düse (30) in dem aufgenommenen Behälter (10) umfasst.

## Revendications

1. Procédé de test d'étanchéité et/ou de résistance de récipients à base de carton, **caractérisé par** les étapes suivantes :
- la production d'un récipient (10) à base de carton hermétiquement fermé ;
- la production d'une ouverture traversante (26) dans un panneau (12, 14, 18) du récipient (10) ; et
- la fixation d'une buse (30) à l'ouverture traversante (26) ;
lequel procédé comprend en outre la mise en oeuvre d'au moins une parmi une première série d'étapes et une deuxième série d'étapes, dans lequel la première série d'étapes comprend :
- l'augmentation de la pression dans le récipient (10) en injectant un fluide gazeux dans le récipient (10) via la buse (30) jusqu'à obtenir une première valeur de pression (p₁) prédéterminée dans le récipient (10) ;
- lorsque la première valeur de pression (p₁) est obtenue dans le récipient (10), la fermeture de la buse (30) pour empêcher le fluide gazeux d'entrer dans le ou de sortir du récipient (10) via la buse (30) ;
- à une période de temps (t_{wait}) prédéterminée après la fermeture de la buse (30), la mesure d'une deuxième valeur de pression (p₂) dans le récipient (10) ; et
- l'utilisation d'une différence de pression (p_{drop}) entre la première valeur de pression (p₁) et la deuxième valeur de pression (p₂) comme mesure de fuite du récipient (10),
et dans lequel la deuxième série d'étapes comprend :
- l'augmentation de la pression dans le récipient (10) en injectant un fluide gazeux dans le récipient (10) via la buse (30) jusqu'à une défaillance du récipient (10) ;
- la mesure de la valeur de pression maximale (pₘₐₓ) obtenue dans le récipient (10) avant la défaillance du récipient (10) ; et
- l'utilisation de la valeur de pression maximale (pₘₐₓ) comme mesure de la résistance du récipient (10),
dans lequel l'étape de fixation de la buse (30) à l'ouverture traversante (26) comprend les sous-étapes suivantes :
- l'insertion d'un disque flexible d'étanchéité (34) entourant une extrémité distale (36) de la buse (30) dans le récipient (10) via l'ouverture traversante (26) ; et
- le fait d'amener le disque d'étanchéité (34) en contact étanche au gaz avec une section de surface interne (54) du récipient (10) entourant l'ouverture traversante (26).

2. Procédé selon la revendication 1, dans lequel l'étape de fixation de la buse (30) à l'ouverture traversante (26) comprend les sous-étapes suivantes :
- le fait d'amener une surface de support (52) en contact avec une section de surface externe (55) du récipient (10) entourant l'ouverture traversante (26) ; et
- le serrage du récipient (10) entre la surface de support (52) et le disque d'étanchéité (34).

3. Procédé selon l'une quelconque des revendications précédentes, dans lequel la mise en oeuvre de la première série d'étapes comprend :
- le calcul d'une différence de pression (p_{drop}) entre la première valeur de pression (p₁) et la deuxième valeur de pression (p₂) ; et
- l'utilisation de la différence de pression (p_{drop}) calculée comme mesure de fuite du récipient (10).

4. Procédé selon l'une quelconque des revendications précédentes, comprenant l'étape de support des panneaux latéraux (18) du récipient (10).

5. Procédé selon l'une quelconque des revendications précédentes, dans lequel le procédé comprend en outre l'étape suivante :
- le tracé et l'enregistrement d'un graphique de pression pendant la première série d'étapes et/ou la deuxième série d'étapes.

6. Procédé selon l'une quelconque des revendications précédentes, dans lequel l'étape de production d'une ouverture traversante dans le récipient (10) comprend les sous-étapes suivantes :
- la réception du récipient (10) dans un réceptacle (22) d'un appareil (20) de perçage ou de coupe ; et
- la production d'une ouverture traversante (15) dans le récipient (10) reçu au moyen d'un dispositif (24) de perçage ou de coupe de l'appareil (20) de perçage ou de coupe.

7. Procédé selon l'une quelconque des revendications précédentes, comprenant l'étape suivante :
- le retrait d'un produit alimentaire du récipient (10) via l'ouverture traversante (26) avant de mettre en oeuvre ladite au moins une parmi la première série d'étapes et la deuxième série d'étapes.

8. Procédé selon l'une quelconque des revendications précédentes, dans lequel ladite première valeur de pression (p₁) est dans la plage de 100 mbar à 500 mbar.

9. Procédé selon l'une quelconque des revendications précédentes, dans lequel ladite période de temps (t_{wait}) prédéterminée est dans la plage de 5 s à 30 s.

10. Appareil de test de pression (42, 242) pour tester l'étanchéité et/ou la résistance d'un récipient (10) à base de carton, **caractérisé en ce que** l'appareil de test de pression (42) comprend :
- une buse (30, 230) adaptée pour être amenée en contact étanche au gaz avec une ouverture traversante (26) percée ou découpée dans un panneau (12, 14, 18) du récipient (10) ;
- une unité de pression (44) en communication fluidique avec la buse (30), pour augmenter la pression dans le récipient (10) ;
- un capteur de pression (46) pour surveiller la pression à l'intérieur du récipient (10) ;
- un système de commande (48) communiquant avec le capteur de pression (46) et l'unité de pression (44), pour réguler la pression appliquée à l'intérieur du récipient (10),
dans lequel la buse (30) comprend un disque flexible d'étanchéité (34) encerclant une extrémité distale (36) de la buse (30), lequel disque d'étanchéité (34) est configuré pour être amené en contact étanche au gaz avec une section de surface interne (54) du récipient (10) encerclant l'ouverture traversante (26).

11. Appareil de test de pression (42, 242) selon la revendication 10, dans lequel l'appareil de test de pression (42) comprend en outre un boîtier (50) dans lequel la buse (30) est agencée, dans lequel le boîtier (50) est adapté pour recevoir le récipient (10) et fixer la buse (30) au récipient (10).

12. Appareil de test de pression (42) selon la revendication 11, dans lequel le boîtier (50) comprend une surface de support (52) configurée pour être amenée en contact avec une section de surface externe (55) du récipient (10) entourant l'ouverture traversante (26), et dans lequel la surface de support (52) et le disque d'étanchéité (34) sont configurés pour venir en contact avec le récipient (10) dans un mouvement de serrage.

13. Appareil de test de pression (42) selon l'une quelconque des revendications 11 et 12, dans lequel le boîtier (50) comprend une structure de support pour supporter les panneaux de paroi latérale (18) du récipient (10) reçu pendant le test.

14. Appareil de test de pression (42) selon l'une quelconque des revendications 10 à 13, dans lequel l'appareil de test de pression (42) comprend :
- un programme informatique comprenant des instructions qui, lorsque le programme informatique est exécuté par un ordinateur (272), amènent l'ordinateur (272) à ordonner à l'appareil de test de pression (42) de mettre en oeuvre la première série d'étapes et/ou la deuxième série d'étapes du procédé selon l'une quelconque des revendications 1 à 9.

15. Programme informatique comprenant des instructions qui, lorsque le programme est exécuté par un ordinateur (272) installé dans un appareil de test de pression (42, 242) selon l'une quelconque des revendications 11 à 14, amènent l'ordinateur (272) à ordonner à l'appareil de test de pression (42, 242) de mettre en oeuvre la première série d'étapes et/ou la deuxième série d'étapes selon l'une quelconque des revendications 1 à 9.

16. Système de test d'étanchéité et/ou de résistance d'un récipient (10) à base de carton, **caractérisé en ce que** le système comprend :
- un appareil de test de pression (42) selon l'une quelconque des revendications 11 à 14 ; et
- un appareil (20) de perçage ou de coupe pour produire une ouverture traversante (26) dans le récipient (10),
dans lequel l'appareil (20) de perçage et de coupe comprend un réceptacle (22) pour recevoir un récipient (10) et un dispositif (24) de perçage ou de coupe pour produire une ouverture traversante (26), pour la fixation de la buse (30), dans le récipient (10) reçu.
